Europäisches Patentamt

European Patent Office

Office européen des brevets

(19)

(11) Veröffentlichungsnummer: **0 029 263**
**B1**

(12) **EUROPÄISCHE PATENTSCHRIFT**

(45) Veröffentlichungstag der Patentschrift:
20.07.83

(21) Anmeldenummer: 80201017.3

(22) Anmeldetag: 27.10.80

(51) Int. Cl.³: **F 16 M 1/04,** H 02 K 5/16,
F 16 C 35/00

(54) Generatorlagerung.

(30) Priorität: **20.11.79 CH 10331/79**

(43) Veröffentlichungstag der Anmeldung:
**27.05.81 Patentblatt 81/21**

(45) Bekanntmachung des Hinweises auf die Patenterteilung:
**20.07.83 Patentblatt 83/29**

(84) Benannte Vertragsstaaten:
**CH DE FR LI SE**

(56) Entgegenhaltungen:
**AT-B-324 485**
**CH-A-486 145**
**DE-C-432 103**
**GB-A-581 879**
**GB-A-741 284**
**US-A-1 356 037**
**US-A-1 626 760**

,,Siemens Zeitschrift'', Jahrgang 45, Heft 1, Januar 1971, K. Lang *et al.*: ,,Neue Reihe von Drehstrommaschinen grosser Leistung in Bauform B3'', S. 33 bis 37.

(73) Patentinhaber: **BBC Aktiengesellschaft Brown, Boverl & Cie., Haselstrasse, CH-5401 Baden (CH)**

(72) Erfinder: **Dömer, Wolfgang, Guggimoos 395, CH-5425 Schneisingen (CH)**
Erfinder: **Weber, Norbert, Dipl.-Ing., Giselherstrasse 2, D-6944 Hemsbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Generatorlagerung

Die vorliegende Erfindung betrifft eine Generatorlagerung für Turbogeneratoren mit darin angeordneten Lagerungen und Verstärkungsrippen sowie Abdichtungen gegenüber dem Statorgehäuse und über den Umfang verteilten Befestigungen.

Bei den bekannten Anordnungen der Schildlager in Generatoren ist es üblich, das Schildlager am Statorgehäuse zu verschrauben. Daraus ergibt sich der Nachteil, dass sämtliche Unwuchtkräfte des Rotors in das Statorgehäuse eingeführt und von dort in das Fundament weitergeleitet werden müssen. Dies erfordert gerade bei Turbogeneratoren mit grossen Leistungen verhältnismässig gross dimensionierte Auflagerungen des Statorgehäuses, welches ausserdem vibrationsbelastet ist, wodurch Schäden auftreten können.

Es ist daher Aufgabe der vorliegenden Erfindung, eine Generatorlagerung zu schaffen, mittels welcher die Rotorkräfte direkt in das Fundament eingeleitet werden können.

Die vorgenannte Aufgabe wird erfindungsgemäss dadurch gelöst, dass ein aus Aussenwänden und diese verbindenden Verstärkungsrippen gebildeter Schildlagerbock doppelwandig und kastenartig ausgebildet ist und die Lagerungen in besonderen Abstützungen angeordnet sind, und dass der Schildlagerbock mit Fundamentabstützungen versehen ist.

Durch diese Ausbildung ergibt sich der Vorteil, dass die doppelwandige Ausbildung des Schildlagers eine genügend breite Grundfläche ergibt, um daran Fundamentabstützungen anzuordnen, woraus wiederum ein solider Fuss resultiert, in welchem eine ausreichende Anzahl von Fundamentankern angebracht werden kann, so dass die Einleitung der Rotorkräfte in das Fundament gewährleistet wird. Durch die Anwendung von Querrippen und die Ausbildung von Abstützungen für die Lagerungen wird im Schildlagerbock eine erforderliche Steifheit desselben erzielt und gleichzeitig die Möglichkeit geschaffen, ein entsprechend dimensioniertes Lager innerhalb des kastenartig ausgebildeten Lagerschildes unterzubringen.

Die Fundamentabstützungen werden vorteilhaft in bekannter Weise über Einstellelemente direkt auf dem Fundament abgestützt.

In der Zeichnung ist ein Ausführungsbeispiel des Erfindungsgegenstandes in vereinfachter Form dargestellt.

Es zeigen:

Fig. 1 eine Teilansicht einer erfindungsgemässen Generatorlagerung,

Fig. 2 einen Querschnitt der Generatorlagerung entlang der Schnittlinie A-A in Fig. 1, und

Fig. 3 eine Seitenansicht der Generatorlagerung gemäss Fig. 1.

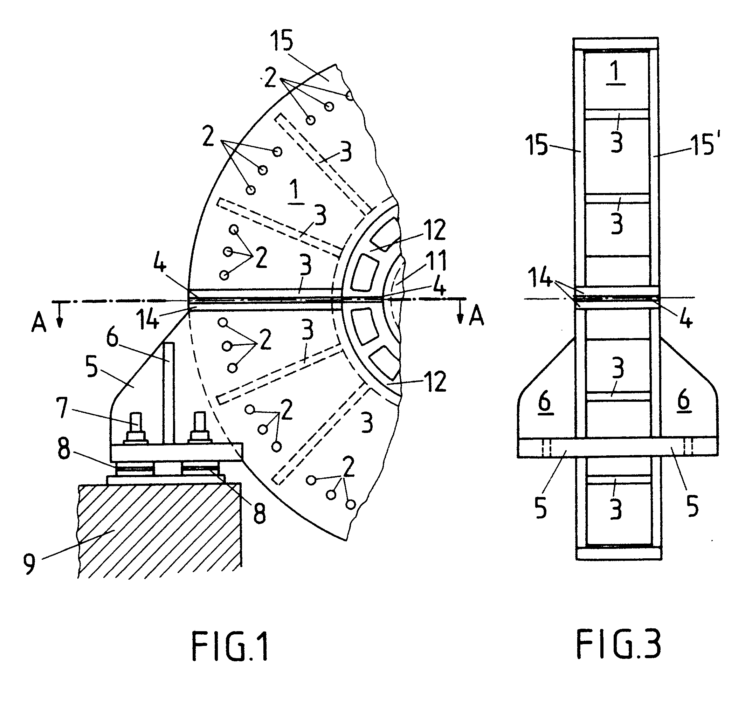

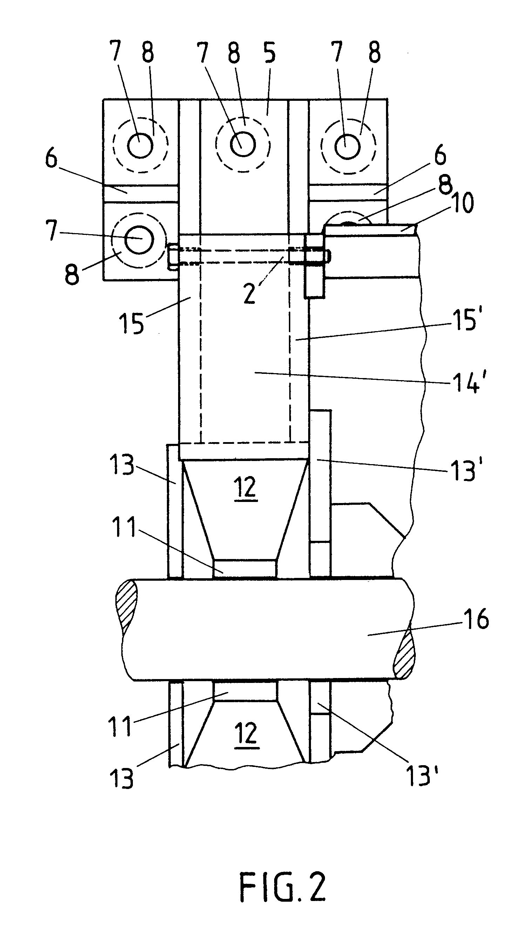

Gemäss Fig. 1 ist mit 1 ein Lagerschild eines Turbogenerators bezeichnet, welcher mittels Befestigungsschrauben 2 an einem (nicht dargestellten) Statorgehäuse befestigt ist. Das Lagerschild 1 besteht (gemäss Fig. 2) aus zwei Aussenwänden 15, 15', deren Innenseiten (gemäss Fig. 1 und 3) Verstärkungsrippen 3 aufweisen, welche die beiden Aussenwände 15, 15' miteinander verbinden, und die an der Trennebene 4 der Aussenwände 15, 15' als Flansch 14 ausgebildet sind. Unterhalb der Trennebene 4 sind an den Aussenwänden 15, 15' Fundamentabstützungen 5 mit Versteifungen 6 zur Erhöhung der Festigkeit angeordnet, welche von Fundamentankern 7 durchdrungen sind, die über Einstellelemente 8 in einem Fundament 9 verankert sind. In den beiden Aussenwänden 15, 15' mit den Flanschen 14 ist weiterhin eine sternförmig ausgebildete Abstützung 12 für ein Lager 11 vorgesehen, wobei die Abstützung 12 entlang der Trennebene 4 in zwei gleiche Hälften geteilt ist.

Wie in der Fig. 2 gezeigt, ist das doppelwandige Lagerschild 1 am Statorgehäuse 10 mittels der Befestigungsschrauben 2 befestigt und nimmt die sternförmig ausgebildete Abstützung 12 und das Lager 11 für eine Welle 16 auf, welche das Lagerschild 1 durchdringt. Das Lager 11 ist in den sternförmigen Abstützungen 12 gehalten und wird durch abnehmbare Abdeckungen 13 von aussen für Inspektionen oder Revisionen zugänglich gemacht, während an der Innenseite der Wand 15' eine Abdeckung 13' vorgesehen ist, welche einen Gasaustritt aus dem Statorgehäuse durch das Lager 11 verhindern soll.

Wie aus der Fig. 3 ersichtlich, sind die beiden Aussenwände 15, 15' des Lagerschildes 1 durch die Verstärkungsrippen 3 verstärkt und miteinander verbunden, so dass sich neben der kastenartigen Ausbildung auch eine besondere Steifheit des Lagerschildes ergibt.

Durch die erfindungsgemässe Ausbildung des Schildlagerbockes wird das Statorgehäuse von den Rotorschwingungen entlastet, indem die Unwuchtkräfte des Rotors direkt über das Lagerschild 1 und die Fundamentabstützungen 5 in das Fundament 9 eingeleitet werden, ohne das Statorgehäuse zu belasten.

*Bezeichnungsliste*

1 = Lagerschild
2 = Befestigungsschrauben
3 = Verstärkungsrippen
4 = Trennebene
5 = Fundamentabstützungen
6 = Versteifungen
7 = Fundamentanker
8 = Einstellelemente
9 = Fundament
10 = Statorgehäuse
11 = Lager
12 = sternförmige Abstützung
13, 13' = Abdeckungen
14 = Flansch
15, 15' = Aussenwände
16 = Welle

## Patentansprüche

1. Generatorlagerung für Turbogeneratoren mit darin angeordneten Lagerungen und Verstärkungsrippen sowie Abdichtungen gegenüber dem Statorgehäuse und über den Umfang verteilten Befestigungen, dadurch gekennzeichnet, dass ein aus Aussenwänden (15, 15') und diese verbindenden Verstärkungsrippen (3) gebildeter Schildlagerbock (1) doppelwandig und kastenartig ausgebildet ist und die Lagerungen (11) in gesonderten Abstützungen (12) angeordnet sind, und dass der Schildlagerbock (1) mit Fundamentabstützungen (5) versehen ist.

2. Generatorlagerung nach Anspruch 1, dadurch gekennzeichnet, dass die Fundamentabstützungen (5) in bekannter Weise über Einstellelemente (8) direkt auf dem Fundament (9) abgestützt sind.

## Claims

1. Generator bearing for turbo-generators with bearings located therein and reinforcing ribs as well as with sealing-off means in relation to the stator housing and fastenings distributed over the periphery, characterised in that a trunnion bearing block (1) formed from outer walls (15, 15') and from reinforcing ribs (3) connecting these is made double-walled and box-like, and the bearings (11) are arranged in separate supports (12), and in that the trunnion bearing block (1) is provided with foundation supports (5).

2. Generator bearing according to claim 1, characterised in that the foundation supports (5) are supported directly on the foundation (9) in a known way via adjusting elements (8).

## Revendications

1. Support de générateur pour turboalternateur contenant des paliers et des nervures de renforcement, ainsi que des éléments d'étanchéité par rapport à l'enveloppe du stator et des éléments de fixation répartis sur la périphérie, caractérisé en ce qu'un support de palier à bouclier, formé de parois extérieures (15, 15') et de nervures de renforcement (3) reliant ces parois, est à double paroi et en forme de caisson, et les paliers (11) sont montés dans des supports séparés (12), le support de palier à bouclier (1) étant pourvu d'appuis de fondations (5).

2. Support de générateur suivant la revendication 1, caractérisé en ce que les appuis de fondations (5) portent directement sur le massif de fondation (9) d'une manière connue, par l'intermédiaire d'éléments de réglage (8).

FIG.1

FIG.3

FIG.2